# EUROPÄISCHE PATENTSCHRIFT

(11) **EP 2 243 005 B1**
(45) Veröffentlichungstag und Bekanntmachung des Hinweises auf die Patenterteilung: **06.04.2016**
(21) Anmeldenummer: 09709808.1
(22) Anmeldetag: 04.02.2009
(51) Int. Cl.: G01G 21/28

(54) **WINDSCHUTZ FÜR EINE WAAGE**
WINDSHIELD FOR A BALANCE
PROTECTION ANTI-VENT POUR UN APPAREIL DE PESÉE

(30) Priorität: 11.02.2008 DE 102008008486
(43) Veröffentlichungstag der Anmeldung: 27.10.2010
(73) Patentinhaber: Mettler-Toledo GmbH, 8606 Greifensee (CH)
(72) Erfinder: DÜRST, Balthasar, CH-8602 Wangen b. Dübendorf (CH); MOCK, Daniel, CH-8102 Oberengstringen (CH)
(86) Internationale Anmeldenummer: PCT/EP2009/051256
(87) Internationale Veröffentlichungsnummer: WO 2009/101010

(56) Entgegenhaltungen:
- EP-A- 1 195 585
- DE-C1- 3 508 873
- JP-A- 7 260 559
- US-A1- 2006 185 909

## Beschreibung

Die Erfindung betrifft einen Windschutz für eine Waage mit einer Rückwand und sich von den oberen Ecken derselben nach vorne erstreckenden Stegen mit Führungen für eine Abdeckwand und für zwei Seitenwände.

Windschutzeinrichtungen dienen dem Zweck, bei Präzisionswaagen dafür zu sorgen, daß es zu keiner Verfälschung des Wägeergebnises durch Luftbewegungen kommen kann. Dazu verfügen die Windschutzeinrichtungen in der Regel über eine Rückwand, Seitenwände, eine Frontwand und eine Abdeckwand. Die Windschutzeinrichtungen sind auf die Oberseite der Waagen aufgesetzt oder fest mit dieser verbunden. Dabei sind alle Wände bis auf die Rückwand in der Regel durchsichtig, um einen freien Blick auf die Wägeeinrichtung zu haben. Deshalb müssen diese Wände bei auftretender Verschmutzung ab und zu gereinigt werden. Die Windschutzeinrichtungen sind öffenbar, um das Wägegut in den von der Windschutzeinrichtung umschlossenen Innenraum einzubringen und auf einer dort befindlichen Aufnahme für das Wägegut, beispielsweise einer Waagschale, zu deponieren. Die Aufnahme für das Wägegut ist vermittels einer Lasteinleitung mit der Wägezelle verbunden. Besitzt eine Windschutzeinrichtung einen Boden, muß die Lasteinleitung durch diesen hindurchgeführt sein.

Ein Windschutz einer Waage, wie in der US 2006/185909 A1 offenbart wird, weist je einen Rahmen zum Halten der Frontwand und der Rückwand auf, welche in diesem Rahmen jeweils über eine Raste gehalten werden. Am Rahmen der Rückwand sind oben nach vorne weisende stummelförmige Führungen für die Seitenwände befestigt. Die Abdeckwand ist aufklappbar. Sämtliche Wände können nach Abnahme der Abdeckwand nach aussen gekippt und nach oben aus ihrer Halterung entnommen werden.

Die DE 35 08 873 C1 offenbart einen Windschutz mit einem Rahmen zum Halten der Rückwand auf. Die Halterung der Frontwand ist Steg- und Rahmenfrei. Dafür sind an der Abdeckung des Windschutzes zwei Führungen für die Seitenwände vorhanden, wodurch die Seitenwände ein L-förmiges Profil bekommen.

Die Schrift EP1 195 5852 A1 beschreibt einen Windschutz für eine Waage, bei dem die Frontwand und die Seitenwände an ihrer Unterseite gehaltert sind und in der Halterung schräg gestellt werden können. Mittels eines Rastverschlusses an der Rückwand können die Seitenwände in eine Verschlusslage einrasten.

Ein Windschutz der eingangs genannten Art ist aus der JP 07260559 A bekannt. Dieser Windschutz weist eine mit Schrauben befestigte Frontwand auf, sowie eine nach hinten verschiebbare Abdeckwand. Diese dient dem Zugang zum Innenraum und wird daher nach der Lehre dieser Schrift mit einem elastischen Puffer zur Vermeidung eines harten Anschlags ausgestattet. Der Nachteil dieses Windschutzes besteht darin, daß zur Reinigung die Frontscheibe abgeschraubt werden muß, damit auch die beiden Seitenwände aus ihren Führungen geschoben werden können. Dies ist zeitaufwendig und erfordert den Einsatz von Werkzeugen.

Der Erfindung liegt daher die Aufgabe zugrunde, einen Windschutz der eingangs genannten Art derart weiterzubilden, daß er leicht gereinigt und ohne Werkzeug die zu reinigenden Teile abgenommen werden können.

Die Aufgabe wird erfindungsgemäß dadurch gelöst, daß die Frontwand unterseitig in eine Aufnahme einsetzbar, bis zur Bündigkeit gegen die Abdeckwand und die Seitenwände schwenkbar und in dieser Position durch frontseitig an den Stegen angebrachte Verriegelungselemente sicherbar ist. Dabei sind die Seitenwände und/oder die Abdeckwand zur Entnahme nach vorne herausziehbar.

Unter Bündigkeit wird hier ein Aneinanderliegen von Frontwand und Abdeck- wie Seitenwänden verstanden, derart, daß nahezu kein Spalt mehr vorhanden ist, durch den ein die Wägung beeinträchtigender Luftzug eintreten könnte.

Die Aufnahme zum Einfügen der Frontwand kann unterschiedlich ausgebildet sein. Es kann sich um eine Nut oder ein aufgesetztes U-Profil handeln. Es könnten auch Stifte in Bohrungen eingeschoben werden. Letztlich ist jede Ausgestaltung möglich, die der Unterkante einen Halt gibt und dabei eine gewisse Schwenkbarkeit ermöglicht, derart, daß die Frontwand bzw. die Frontplatte bei der Entnahme an den Verriegelungselementen vorbeigeführt werden kann.

Die Verriegelungselemente können unterschiedlichste Ausgestaltungen aufweisen, wesentlich ist lediglich, daß sie die Frontplatte in ihrer geschlossenen Position halten.

Die erfindungsgemäße Ausgestaltung hat den Vorteil, daß die Frontwand ohne Hilfsmittel auf einfache Weise einsetz- und herausnehmbar sowie ver- und entriegelbar ist. Auch die Abdeckwand und die Seitenwände können ohne Werkzeugeinsatz aus ihren Führungen herausgeschoben werden. Dies hat neben der werkzeuglosen Montage und Demontage den weiteren Vorteil, daß hinter der Waage und seitlich von ihr für eine solche Demontage beziehungsweise Montage kaum Platz benötigt wird. Es wird also bei geringem Platzbedarf eine einfache Montage und Demontage und damit auch eine einfache Reinigbarkeit erzielt.

Durch die jeweiligen Verriegelungselemente sind gleichzeitig drei Wände, namentlich die Frontwand, eine Seitenwand und die Abdeckwand, verriegelbar. Denkbar ist, dass durch einstellbare Positionen eines Verriegelungselements diese Wände selektiv freigegeben werden können.

Für diesen Fall kann es weiter zweckmäßig sein, wenn im geschlossenen Zustand die Frontwand an den Kanten der Wände anliegt. Dadurch wird erreicht, daß die Frontwand die Wände gegen ein unbeabsichtigtes Herausschieben beziehungsweise Herausfallen sichert. Im umgekehrten Fall, in welchem die Seitenwände und die Abdeckwand an den Kanten der Frontwand anliegen, sind diese in der Verriegelungsstellung ebenfalls stets gegen ein Herausfallen gesichert.

Um den Innenraum des Windschutzes auf besonders einfache Weise zugänglich zu machen, kann vorgesehen sein, daß sich mindestens eine Seitenwand und/oder die Abdeckwand nach hinten schieben lassen. Zweckmäßigerweise wird dann die mindestens eine verschiebbare Wand mit einem Anschlag ausgestattet, wodurch diese bei ihrer maximalen Öffnungsposition noch in der Führung gehalten wird. Ein Griff an der betreffenden Wand kann zur Durchführung der Schiebebewegung dienen, dieser kann dann auch mit einem entsprechenden Gegenstück als Anschlag dienen.

Als Verriegelungselemente können Schieber, schwenkbare Elemente oder auch Rasten dienen, der Mechanismus kann separat an jedem Verriegelungselement zu betätigen sein oder beide Seiten können durch ein einziges Betätigungselement zentral verriegelt werden. Rasten können auch von selbst einrasten und durch Zug oder Entriegelung wieder ausgerastet werden.

Vorzugsweise werden die Verriegelungselemente jedoch derart ausgebildet, daß sie Halteelemente aufweisen, die zwischen einer Freigabestellung und einer Verriegelungsstellung für die Frontwand schwenkbar sind. Dies ist eine einfache Mechanik mit geringem Platzbedarf und leicht zu bedienen.

Vorzugsweise werden die Halteelemente in Halterichtung federbeaufschlagt und Aufgleitschrägen sorgen bei der Verriegelung für die Bewirkung der Federspannung, welche dann als Haltekraft dient. Die Aufgleitschrägen können natürlich sowohl an den Halteelementen als auch an der Aufgleitstelle der Frontwand vorgesehen sein oder auch in die Mechanik der Verriegelungselemente integriert sein.

Die Verriegelungselemente können als Drehrastelemente ausgebildet sein. Dabei kann die Verrastung, insbesondere mittels der Federkraftbeaufschlagung, dazu dienen, daß die Bedienperson das Erreichen der Verriegelungsstellung wahrnimmt. Dabei sind mehrere konkrete Ausgestaltungen möglich, wie beispielsweise federbeaufschlagte Kugeln, die in Vertiefungen rasten oder es kann vorgesehen sein, daß die Drehrasterelemente durch Noppen sowie diese im geschlossenen Zustand aufnehmende Vertiefungen gebildet sind. In diesem Fall können auch die Noppen oder die Vertiefungen Aufgleitanschrägen aufweisen. Sieht man Noppen an den Enden der Stege vor, so ist es möglich, daß die Frontwand an ihren oberen Ecken Öffnungen aufweist, durch die die Noppen hindurchgreifen, bevor sie zur Verrastung in Vertiefungen der Halteelemente eingreifen. Dadurch haben die Drehrastelemente noch den weiteren Vorteil, daß die Frontwand eindeutig positioniert ist und dadurch auch sichergestellt ist, daß die Bündigkeit zur Abdeckwand und den Seitenwänden korrekt ist.

Die Drehrastelemente können auf die Vorderseite der Stege aufgesetzt oder in diese integriert sein. Sie können beispielsweise derart ausgestaltet sein, daß die Drehachsen der Verriegelungselemente in Bohrungen der Stege einfügbar sind und an mindestens einem Absatz durch Sicherungselemente gehalten werden. Dies ist ein besonders einfacher, schnell zusammenbaubarer und funktionssicherer Aufbau.

Der Windschutz als solcher kann dabei selbstverständlich in unterschiedlicher Weise ausgebildet sein. Beispielsweise ist es möglich, daß die Rückwand an der Waage befestigbar ist und sich die Aufnahme zur Einsetzung der Frontwand an der Waagenoberseite befindet, derart, daß die oben genannte Schwenkung und Verriegelung möglich sind. Auch die Seitenwände können an ihrer Unterkante mittels Führungen geführt sein, die sich an der Waagenoberseite befinden. Alternativ kann jedoch auch vorgesehen sein, daß die Seitenwände lediglich in den Führungen der Stege geführt sind und an ihrer Unterkante auf der Waagenoberseite nur anliegen, jedoch in ihrer Endposition von Aufnahmeschlitzen der Rückwand oder von Aufnahmeschlitzen eines Rahmens gehalten werden, welcher die Rückwand umfaßt.

Der Windschutz kann natürlich auch an der Oberseite der Waage fest angebracht sein oder er kann mittels eines Basisrahmens auf die Waagenoberseite aufgesetzt werden. Vorzugsweise weist er jedoch eine Bodenplatte auf, die auf der Waagenoberseite angeordnet wird. Die Bodenplatte trägt dann die Rückwand und weist eine Öffnung, durch die die Lasteinleitung hindurch tritt auf. Weiterhin weist dann die Bodenplatte auch die unteren Führungen für die Seitenwände und die Aufnahme für die Frontplatte auf.

Zusätzlich kann ein Rahmen, der die Rückwand umfaßt, vorgesehen sein, der dann auch die oberen Stege für die Führungen der Seitenwände hält. Dieser Rahmen kann mit der oben genannten Bodenplatte oder dem oben genannten Basisrahmen verbunden sein.

Die vorgenannten Ausgestaltungen sind lediglich Gestaltungsvorschläge, da das erfindungsgemäße Einsetzen der Frontplatte unabhängig von der konkreten Ausgestaltung des Windschutzgehäuses ist. Für letzteres sind eine Aufnahme für die Frontplatte an deren Unterseite und zwei Verriegelungselemente im Bereich der oberen Ecken ausreichend.

Dies heißt jedoch nicht, daß die zwei Verriegelungselemente unabhängig voneinander betätigbar sein müssen. Beispielsweise könnte an der Oberseite der Frontwand ein auf ein Verriegelungsgestänge derart wirkendes Betätigungselement angeordnet sein, daß das Verriegelungsgestänge zur Bewirkung der Verriegelung mit frontseitig an den Stegen angebrachten Verriegelungselementen zusammenwirkt. Ein solches Betätigungselement könnte beispielsweise ein in die Frontplatte integriertes Verriegelungsgestänge mittels Hebel oder Exzenter bewegen. Die Verriegelungselemente an den Stegen wären dann beispielsweise Hinterschneidungen, in welche das Verriegelungsgestänge ähnlich wie ein Riegel eingreift. Auch dieses Beispiel soll nur aufzeigen, daß die Erfindung mittels vieler konkreter Gestaltungen realisierbar ist.

Die Erfindung wird nachfolgend anhand eines Ausführungsbeispiels erläutert. Es zeigen:
- Fig. 1: einen Windschutz mit verriegelter Frontwand,
- Fig. 2: einen Windschutz mit entriegelter Frontwand,
- Fig. 3: Einzelheiten einer Verriegelung und
- Fig. 4: eine alternative Ausgestaltung einer Verriegelung.

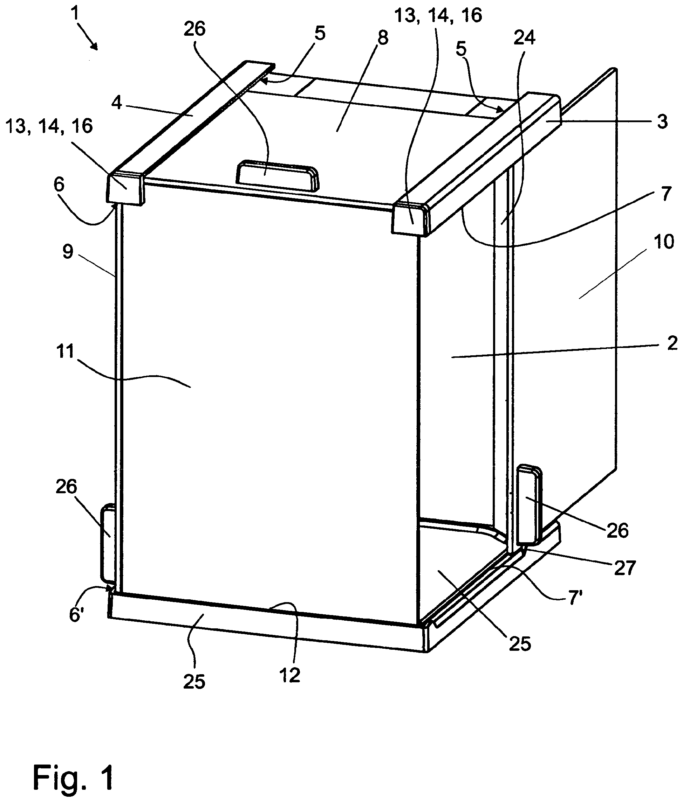

Fig. 1 zeigt einen Windschutz 1 mit verriegelter Frontwand 11. Dieser Windschutz 1 ist derart aufgebaut, daß er eine Bodenplatte 25 zum Aufsetzen auf die Waagenoberfläche aufweist, die an ihrem hinteren Ende einen Rahmen 24 trägt, welcher eine Rückwand 2 umfaßt. Die Rückwand 2 kann mittels einer nicht dargestellten Rastvorrichtung im Rahmen 24 befestigt sein. An diesen Rahmen 24 sind an den oberen Enden zwei Stege 3, 4 angebracht, welche in einer horizontalen Ebene nach vorne ragen. Diese Stege 3, 4 weisen an ihrer Unterseite Führungen 6 und 7 auf und die Bodenplatte 25 an ihrer Oberseite Führungen 6' und 7', welche zum Einschieben der Seitenwände 9, 10 dienen. Dabei werden die Seitenwände 9, 10 von vorne in die Führungen 6, 6' beziehungsweise 7, 7' eingeschoben. Führungen 5, die sich ebenfalls in den Stegen 3, 4 befinden, dienen zur Aufnahme der Abdeckwand 8, die ebenfalls von vorne eingeschoben werden kann.

Um die Seitenwände 9, 10 zum Öffnen des Windschutzes 1 nach hinten zu schieben, dienen Griffe 26, welche mit Anschlägen 27 zusammenwirkend dafür sorgen, daß die Seitenwände 9, 10 in ihrer maximalen Öffnungsposition noch sicher von den Führungen 6, 6' und 7, 7' gehalten werden. Zum selben Zweck dient ein Griff 26 der Abdeckwand 8.

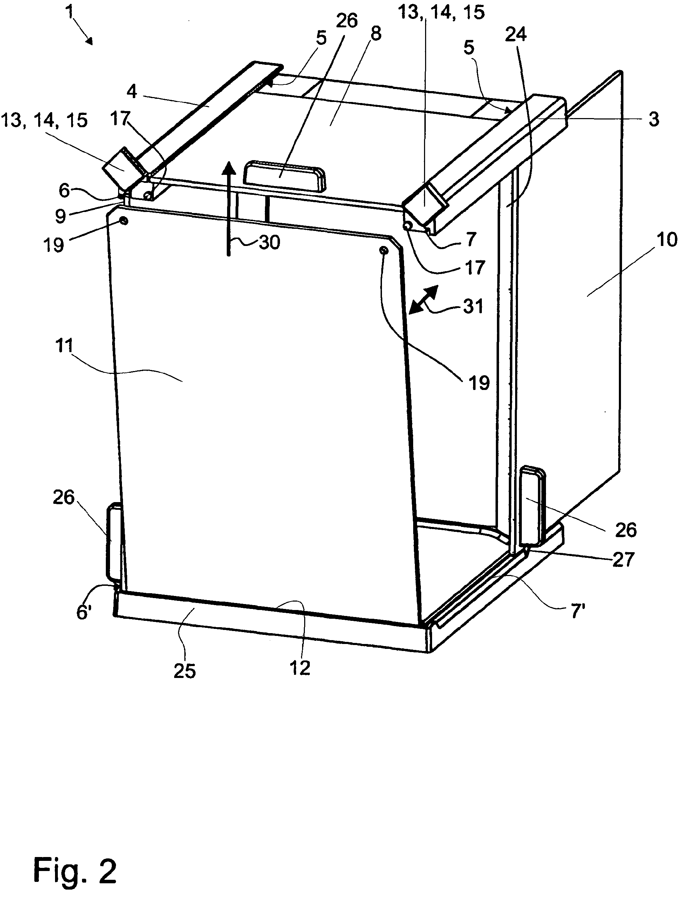

Sind die Abdeckwand 8 und die Seitenwände 9 und 10 eingeschoben, so wird die Frontwand 11 in eine Aufnahme 12 eingesetzt, die ebenfalls als U-förmige Nut oder Kerbe ausgebildet sein kann. Diese Aufnahme 12 befindet sich hier ebenfalls in der Bodenplatte 25. Die Frontwand 11 wird dann derart angeschwenkt (siehe Pfeil 31 der Fig. 2), daß sie mit den Kanten der Seitenwände 9, 10 und der Abdeckwand 8 derart bündig ist, daß der Windschutz 1 winddicht ist. Dann erfolgt eine noch näher zu erläuternde Verriegelung mittels der Verriegelungselemente 13, wobei sich - wie es die dargestellte Verriegelungsposition 16 zeigt - die Halteelemente 14 der Verriegelungselemente 13 über die Ecken der Frontwand 11 legen und diese so halten.

Fig. 2 zeigt einen Windschutz 1 mit entriegelter Frontwand 11, welche zuerst - wie der Doppelpfeil 31 zeigt - weggeschwenkt wurde, um sie dann in Richtung des Pfeils 30 entnehmen zu können. Dabei sind die Teile identisch zu Fig. 1 und hier teilweise nicht nochmals bezeichnet. Bei dieser Abbildung sind die Verriegelungselemente 13 mit Ihren Halteelementen 14 in ihrer Freigabestellung 15 sichtbar. Dadurch ist die Wegschwenkung der Frontwand 11 möglich, damit sie leicht entfernbar ist. Die Seitenwände 9, 10 sowie die Abdeckwand 8 können dann aus den Führungen 5, 6, 6', 7, 7' nach vorne herausgezogen werden, um sie einem Reinigungsvorgang zuzuführen. Beim Zusammenbau wird dann entsprechend in umgekehrter Weise vorgegangen.

Durch die Verschwenkung der Verriegelungselemente 13 in ihre Freigabestellung 15 sind die Enden der Führungen 6 und 7 sichtbar, sowie auch die Noppen 17, in die die Ecken der Frontwand 11 mit ihren Öffnungen 19 einfügbar sind, um in der Verriegelungsstellung 16 (siehe Figur 1) eine exakte Positionierung der Frontwand 11 zu garantieren.

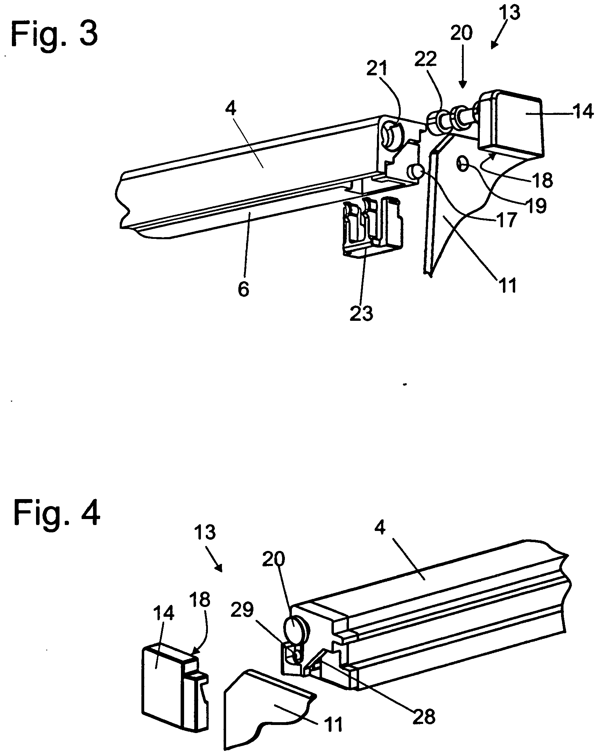

Fig. 3 zeigt schließlich noch Einzelheiten eines Verriegelungselements 13. Gezeigt ist hier ein Steg 4 mit einer Führung 6 für eine Seitenwand 9 sowie das Ende des Stegs 4. In dieses wird das Verriegelungselement 13 eingefügt, indem in eine Bohrung 21 des Stegs 4 eine Drehachse 20 des Verriegelungselements 13 hineingeschoben wird. Danach wird von der Seite, von oben oder unten ein Sicherungselement 23 eingeschoben, das derart ausgebildet ist, daß das Verriegelungselement 13 an mindestens einem Absatz 22 gehalten ist.

Bei dieser Darstellung ist noch deutlich sichtbar, wie die Noppe 17 durch eine Öffnung 19 an einer Ecke der Frontwand 11 hindurchgreifen kann, um dann bei zusammengebautem Verriegelungselement 13 in der Verriegelungsstellung 16 in eine Vertiefung 18 einzugreifen, welche hier in nicht sichtbarer Weise an der hinteren Seite des Halteelements 14 eingearbeitet ist. Dies führt bei einer Federkraftbeaufschlagung zu einem deutlich spürbaren Einrasten.

Fig. 4 zeigt eine alternative Ausgestaltung einer Verriegelung 13. Bei dieser wird eine Ecke der Frontplatte 11 in eine Aussparung 28 eingefügt, um dort verriegelt zu werden. Die Verriegelung besteht hier aus einer im Steg 4 gelagerten Welle 20, auf der sich ein Halteelement 14 befindet. Dieses ist von der Welle 20 abgenommen, um ein Rastelement 29 zu zeigen. Letzteres kann beispielsweise als eine mit einer Vertiefung 18 an der Rückseite des Halteelements 14 zusammenwirkende Kugel ausgebildet sein. Dabei kann die Kugel oder Halteelement 14 und Welle 20 federkraftbeaufschlagt sein. Hier dient die Drehverrastung dazu, der Bedienperson die Einrastung in der Verriegelungsstellung 16 zu signalisieren.

### Bezugszeichenliste

- 1: Windschutz
- 2: Rückwand
- 3: Steg
- 4: Steg
- 5: Führung für Abdeckwand
- 6, 6': Führung für Seitenwände
- 7, 7': Führung für Seitenwände
- 8: Abdeckwand
- 9: Seitenwand
- 10: Seitenwand
- 11: Frontwand
- 12: Aufnahme
- 13: Verriegelungselemente
- 14: Halteelemente
- 15: Freigabestellung
- 16: Verriegelungsstellung
- 17: Noppen
- 18: Vertiefungen
- 19: Öffnungen
- 20: Drehachsen
- 21: Bohrungen
- 22: Absatz
- 23: Sicherungselement
- 24: Rahmen, die Rückwand umfassend
- 25: Bodenplatte
- 26: Griff
- 27: Anschlag
- 28: Aussparung zur Aufnahme der Ecke der Frontplatte
- 29: Rastelement
- 30: Pfeil: Herausziehen der Frontwand
- 31: Doppelpfeil: Ab- und Anschwenken der Frontwand zur Entnahme oder Verriegelung

## Patentansprüche

1. Windschutz (1) für eine Waage mit einer Frontwand (11), mit einer Abdeckwand (8), mit zwei Seitenwänden (9, 10), und mit einer Rückwand (2) und sich von den oberen Ecken derselben nach vorne erstreckenden Stegen (3, 4) mit Führungen (5, 6, 7) für die Abdeckwand (8) und für die Seitenwände (9, 10),
**dadurch gekennzeichnet,**
**daß** die Frontwand (11) unterseitig in eine Aufnahme (12) einsetzbar, bis zur Bündigkeit gegen die Abdeckwand (8) und die Seitenwände (9, 10) schwenkbar und in dieser Position durch frontseitig an den Stegen (3, 4) angebrachte Verriegelungselemente (13) sicherbar ist und daß die Seitenwände (9, 10) und/oder die Abdeckwand (8) bei entriegeltem Verriegelungselement zur Entnahme nach vorne herausziehbar sind.

2. Windschutz nach Anspruch 1,
**dadurch gekennzeichnet,**
**daß** im geschlossenen Zustand die Frontwand (11) an den Kanten der Wände (8, 9, 10) anliegt.

3. Windschutz nach Anspruch 1,
**dadurch gekennzeichnet,**
**daß** im geschlossenen Zustand die Seitenwände (9, 10) sowie die Abdeckwand (8) an den Kanten der Frontwand (11) anliegen.

4. Windschutz nach einem der Ansprüche 1 bis 3,
**dadurch gekennzeichnet,**
**daß** mindestens eine Seite des Windschutzes (1) dadurch öffenbar ist, daß sich mindestens eine Seitenwand (9, 10) nach hinten schieben lässt, und daß er oben öffenbar ist, indem sich die Abdeckwand (8) nach hinten schieben läßt.

5. Windschutz nach Anspruch 4,
**dadurch gekennzeichnet,**
**daß** die mindestens eine verschiebbare Wand (8, 9, 10) mit einem Anschlag (26) ausgestattet ist, so daß sie bei ihrer maximalen Öffnungsposition noch in der Führung (5, 6, 7) gehalten wird.

6. Windschutz nach einem der Ansprüche 1 bis 5,
**dadurch gekennzeichnet,**
**daß** die Verriegelungselemente (13) Halteelemente (14) aufweisen, welche sich in der Verriegelungsposition über die Ecken der Frontwand (11) legen und diese so halten.

7. Windschutz nach Anspruch 6,
**dadurch gekennzeichnet,**
**daß** die Halteelemente (14) sich zwischen einer Freigabestellung (15) und einer Verriegelungsstellung (16) für die Frontwand (11) schwenkbar sind.

8. Windschutz nach einem der Ansprüche 6 oder 7,
**dadurch gekennzeichnet,**
**daß** die Halteelemente (14) in Halterichtung federbeaufschlagt sind und Aufgleitschrägen beim Verriegeln die Federspannung für die Haltekraft bewirken.

9. Windschutz nach einem der Ansprüche 1 bis 8,
**dadurch gekennzeichnet,**
**daß** die Verriegelungselemente (13) als Drehrastelemente ausgebildet sind.

10. Windschutz nach Anspruch 9,
**dadurch gekennzeichnet,**
**daß** die Drehrastelemente Noppen (17) sowie diese im geschlossenen Zustand aufnehmende Vertiefungen (18) aufweisen, wobei die Frontwand (11) an ihren oberen Ecken Öffnungen (19) aufweist, durch die die an den Enden der Stege (3, 4) angebrachte Noppen (17) hindurchgreifen, bevor diese zur Verrastung in Vertiefungen (18) der Halteelemente (14) eingreifen.

11. Windschutz nach Anspruch 9 bis 10,
**dadurch gekennzeichnet,**
**daß** Drehachsen (20) der Verriegelungselemente (13) in Bohrungen (21) der Stege (3, 4) einfügbar ausgebildet sind und an mindestens einem Absatz (22) durch Sicherungselemente (23) gehalten sind.

12. Windschutz nach Anspruch 1 bis 11,
**dadurch gekennzeichnet,**
**daß** die Rückwand (2) an der Waage befestigbar ist und sich die Aufnahme (12) an der Waagenoberseite befindet.

13. Windschutz nach einem der Ansprüche 1 bis 12,
**dadurch gekennzeichnet,**
**daß** die Rückwand (2) von einem Rahmen (24) umfaßt wird und mittels einer Rastvorrichtung im Rahmen (24) befestigt werden kann.

14. Windschutz nach einem der Ansprüche 1 bis 13,
**dadurch gekennzeichnet,**
**daß** die Rückwand (2) von einer Bodenplatte (25) getragen wird und die Bodenplatte (25) auf die Waage aufsetzbar ist.

15. Windschutz nach Anspruch 14,
**dadurch gekennzeichnet,**
**daß** die Bodenplatte (25) Führungen (6', 7') für die Unterkanten der Seitenwände (9, 10) und die Aufnahme (12) aufweist.

## Claims

1. Draft shield (1) for a balance with a front wall (11), with a top cover panel (8), with two sidewalls (9, 10), and with a rear wall (2) and with rails (3, 4) extending forward from the top corners of the rear wall and containing guide tracks (5, 6, 7) for the top cover panel (8) and the sidewalls (9, 10),
**characterized in that**
a front wall (11) can be inserted with its bottom edge into a seat (12), said front wall (11) can be pivoted into flush alignment against the top cover panel (8) and the sidewalls (9, 10) and can be secured in this position by locking elements (13) arranged at the front ends of the rails (3, 4) and when the locking element is released, the sidewalls (9, 10) and/or the top cover panel (8) can be pulled out towards the front in order to take them out.

2. Draft shield according to claim 1,
**characterized in that**
in its closed condition, the front wall (11) is lying snug against the edges of the wall panels (8, 9, 10).

3. Draft shield according to claim 1,
**characterized in that**
in their closed condition, the sidewalls (9, 10) as well as the top cover panel (8) are lying snug against the edges of the front wall (11).

4. Draft shield according to one of the claims 1 to 3,
**characterized in that**
at least one side of the daft shield (1) can be opened by sliding at least one sidewall (9, 10) to the rear and that the draft shield can be opened at the top by sliding the top cover panel (8) to the rear.

5. Draft shield according to claim 4,
**characterized in that**
the at least one slidable wall panel (8, 9, 10) is equipped with an end stop (26) so that in its maximally opened position it is still held in the guide track (5, 6, 7).

6. Draft shield according to one of the claims 1 to 5,
**characterized in that**
the locking elements (13) comprise holder elements (14) which overlying the corners of the front wall 11 and thereby holding the latter in place when the assembly is locked up.

7. Draft shield according to claim 6,
**characterized in that**
the holder elements (14) can be swiveled between a release position (15) and a locked position (16) for the front wall (11).

8. Draft shield according to one of the claims 6 or 7,
**characterized in that**
the holder elements (14) are spring-biased in the holding direction and that in the locking movement, sloped glide ramps are creating the spring tension which provides the holding force.

9. Draft shield according to one of the claims 1 to 8,
**characterized in that**
the locking elements (13) are configured as rotary detent elements.

10. Draft shield according to claim 9,
**characterized in that**
the rotary detent elements comprise projections (17) as well as recesses (18) which are engaged by the projections (17) in the closed condition of the locking devices, wherein the front wall (11), at its upper corners, has openings (19) through which the projections (17) at the ends of the rails (3, 4) have to pass before they can enter into the recesses (18) of the holder elements (14) for the detent engagement.

11. Draft shield according to claim 9 to 10,
**characterized in that**
the pivot axles (20) of the locking elements (13) are configured for insertion into bore holes (21) of the rails (3, 4) and are held in place by at least one stepped-off collar (22) being engaged by retaining elements (23).

12. Draft shield according to claim 1 to 11,
**characterized in that**
the rear wall (2) can be fastened to the balance and the seat (12) is arranged at the topside of the balance.

13. Draft shield according to one of the claims 1 to 12,
**characterized in that**
the rear wall (2) is enclosed by a frame (24) and fastened in the frame (24) by means of a retaining device.

14. Draft shield according to one of the claims 1 to 13,
**characterized in that**
the rear wall (2) is supported by a floor plate (25) and that the floor plate (25) can be set on top of the balance.

15. Draft shield according to claim 14,
**characterized in that**
the floor plate (25) comprises guide tracks (6', 7') for the bottom edges of the sidewalls (9, 10) and further comprises the seat (12).

## Revendications

1. Pare-vent (1) pour une balance, comprenant une paroi avant (11), une paroi de recouvrement (8), deux parois latérales (9, 10) et une paroi arrière (2), ainsi que des traverses (3, 4) s'étendant vers l'avant à partir des coins supérieurs de celle-ci, avec des guidages (5, 6, 7) pour la paroi de recouvrement (8) et pour les parois latérales (9, 10), **caractérisé en ce que** la paroi avant (11) peut être insérée dans une admission (12) par son côté inférieur, pivotée jusqu'à se trouver en affleurement contre la paroi de recouvrement (8) et les parois latérales (9, 10), et bloquée dans cette position sur son côté avant par des éléments de verrouillage (13) fixés sur les traverses (3, 4), et **en ce que** les parois latérales (9, 10) et/ou la paroi de recouvrement (8) peuvent être retirées vers l'avant lorsque l'élément de verrouillage est déverrouillé.

2. Pare-vent selon la revendication 1, **caractérisé en ce que** à l'état fermé, la paroi avant (11) s'applique contre les bords des parois (8, 9, 10).

3. Pare-vent selon la revendication 1, **caractérisé en ce que** à l'état fermé, les parois latérales (9, 10) et la paroi de recouvrement (8) s'appliquent sur les bords de la paroi avant (11).

4. Pare-vent selon l'une des revendications 1 à 3, **caractérisé en ce que** au moins un côté du pare-vent (1) peut être ouvert en faisant coulisser au moins une paroi latérale (9, 10) vers l'arrière, et **en ce qu'**il peut être ouvert sur le haut en faisant coulisser la paroi de recouvrement (8) vers l'arrière.

5. Pare-vent selon la revendication 4, **caractérisé en ce que** l'au moins une paroi coulissante (8, 9, 10) est dotée d'une butée (26), de manière à pouvoir être encore maintenue dans le guidage (5, 6, 7) lorsqu'elle se trouve dans sa position d'ouverture maximale.

6. Pare-vent selon l'une des revendications 1 à 5, **caractérisé en ce que** les éléments de verrouillage (13) présentent des éléments de maintien (14) lesquels s'appliquent sur les coins de la paroi avant (11) dans la position de verrouillage et maintiennent celle-ci de cette façon.

7. Pare-vent selon la revendication 6, **caractérisé en ce que** les éléments de maintien (14) peuvent être pivotés entre une position de libération (15) et une position de verrouillage (16) pour la paroi avant (11).

8. Pare-vent selon l'une des revendications 6 ou 7, **caractérisé en ce que** les éléments de maintien (14) sont contraints par ressort dans la direction de maintien, et des chanfreins de rampe créent la tension de ressort pour la force de maintien lors du verrouillage.

9. Pare-vent selon l'une des revendications 1 à 8, **caractérisé en ce que** les éléments de verrouillage (13) sont conçus comme des éléments d'encliquetage rotatifs.

10. Pare-vent selon la revendication 9, **caractérisé en ce que** les éléments d'encliquetage rotatifs présentent des bossages (17) ainsi que des renfoncements (18) recevant ceux-ci à l'état fermé, la paroi avant (11) présentant des ouvertures (19) dans ses coins supérieurs, à travers lesquelles s'étendent les bossages (17) fixés aux extrémités des traverses (3, 4), avant l'engagement de ceux-ci dans des renfoncements (18) des éléments de maintien (14) pour l'encliquetage.

11. Pare-vent selon la revendication 9 à 10, **caractérisé en ce que** les axes de rotation (20) des éléments de verrouillage (13) sont conçus de manière à pouvoir s'insérer dans des perçages (21) des traverses (3, 4), et sont maintenus sur au moins un gradin (22) par des éléments de blocage (23).

12. Pare-vent selon la revendication 1 à 11, **caractérisé en ce que** la paroi arrière (2) peut être fixée sur une balance et l'admission (12) se trouve sur le côté supérieur de la balance.

13. Pare-vent selon l'une des revendications 1 à 12, **caractérisé en ce que** la paroi arrière (2) est entourée par un cadre (24) et peut être fixée dans le cadre (24) au moyen d'un dispositif d'encliquetage.

14. Pare-vent selon l'une des revendications 1 à 13, **caractérisé en ce que** la paroi arrière (2) est supportée par une plaque de fond (25), et la plaque de fond (25) peut être placée sur la balance.

15. Pare-vent selon la revendication 14, **caractérisé en ce que** la plaque de fond (25) présente des guidages (6', 7') pour les bords inférieurs des parois latérales (9, 10) et l'admission (12).
